# EUROPEAN PATENT SPECIFICATION

(11) **EP 2 811 190 B1**
(45) Date of publication and mention of the grant of the patent: **20.01.2016**
(21) Application number: 14171039.2
(22) Date of filing: 03.06.2014
(51) Int. Cl.: F16C 33/64, B23B 31/02, B23Q 16/00, B23B 31/19, B23B 31/20

(54) **Apparatus for machining a bearing ring**
Vorrichtung zur Bearbeitung eines Lagerrings
Appareil d'usinage d'une bague de palier

(30) Priority: 04.06.2013 IT TO20130461
(43) Date of publication of application: 10.12.2014
(73) Proprietor: Aktiebolaget SKF, 415 50 Göteborg (SE)
(72) Inventor: Marchis, Renato, I-10136 Torino (TO) (IT); Richaud, Stefano, I-12040 Ceresole d'Alba (CN) (IT)
(74) Representative: Tedeschini, Luca

(56) References cited:
- EP-A1- 1 862 241
- DE-U1-202007 014 828
- JP-A- 2012 170 988
- JP-A- 2013 099 818

## Description

### Technical Field of the Invention

The present invention relates to an apparatus for machining a bearing ring.

### Prior Art

In order to machine the raceways of a bearing outer ring, particularly for turning the raceways, the ring to machine is locked radially by radial jaws of a chuck of a numerically controlled machine. The ring forms an axially extending internal cavity providing one or two raceways to be turned. According to the prior art, the radial jaws of the chuck are engaged against a radially outer cylindrical surface of the ring to be machined. The jaws act in radially inner directions, directed toward a central axis of rotation defined by the ring. The bearing ring is rotated around the central axis of rotation due to the radial clamping exerted by the jaws. A cutting tool is moved in numerically controlled manner surface of the raceway(s).

In some instances, the raceways of the bearings manufactured according to the above mentioned technique have roundness defects, and other unacceptable distortions. JP 2012-170988A discloses the features of the preamble of claim 1.

### Summary of the Invention

A primary object of the present invention is to obviate the aforementioned drawback, machining bearing rings with perfectly circular raceways.

The above and other objects and advantages which will be better clarified hereinafter, are achieved, according an aspect of the invention, by an apparatus as defined in claim 1. Preferred embodiments of the invention are defined in the dependent claims. In summary, an apparatus is proposed for machining a bearing ring that defines a central axis of rotation and has an axially extending internal cavity with one or more raceways to be machined, and two opposite end surfaces extending transversely to the axis of rotation and located at two respective opposite axial ends of the ring. The ring is retained axially clamped at the two opposing end surfaces and is driven for rotation about said axis to machine the raceway or raceways.

### Brief Description of the Drawings

A preferred embodiment of an apparatus according to the present invention will now be described, reference being made to the accompanying drawings, in which:
- Figs. 1 and 2 are axial cross-sectional views of an apparatus according to the present invention, in two subsequent steps of a process for machining a bearing ring; and
- Fig. 3 is a perspective view of a centering sleeve forming part of the apparatus of Figures 1 and 2.

### Detailed Description

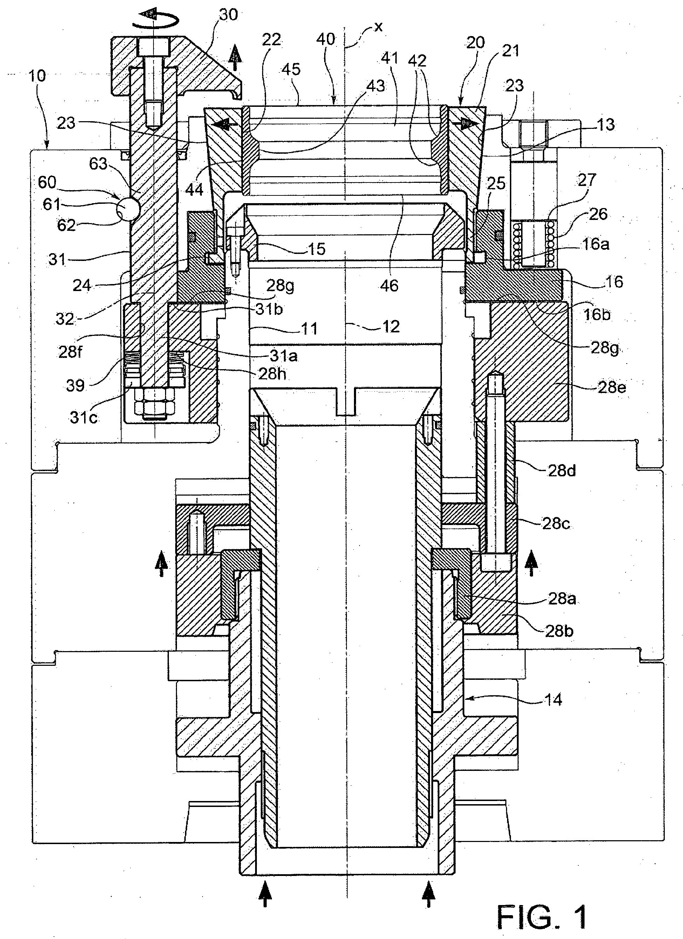

Referring initially to FIG. 1, numeral 10 designates a rotatable part of a machining apparatus, typically a numerically controlled lathe. The rotatable part 10 and parts of the equipment associated with it for the implementation of this process are described herein only in connection with their features that are needed for understanding the invention.

The rotatable part 10 provides a vertically extending cavity 11, having the shape of a surface of revolution around a vertical axis 12. The cavity 11 may be cylindrical or frustoconical, tapering downwards. Superiorly, the cavity 11 provides a top enlarged seat 13, of frustoconical shape, open at the top and downwardly tapered.

A linear driving element 14 is vertically slidable inside the cavity 11, in this example a piston of tubular shape, preferably hydraulically controlled. Mounted in the cavity 11 is an axial positioner 15, in this example of annular shape, having an axially fixed position along the vertical axis 12. The positioner 15 serves as an axial abutment element for a lower axial bearing ring 40 to be machined.

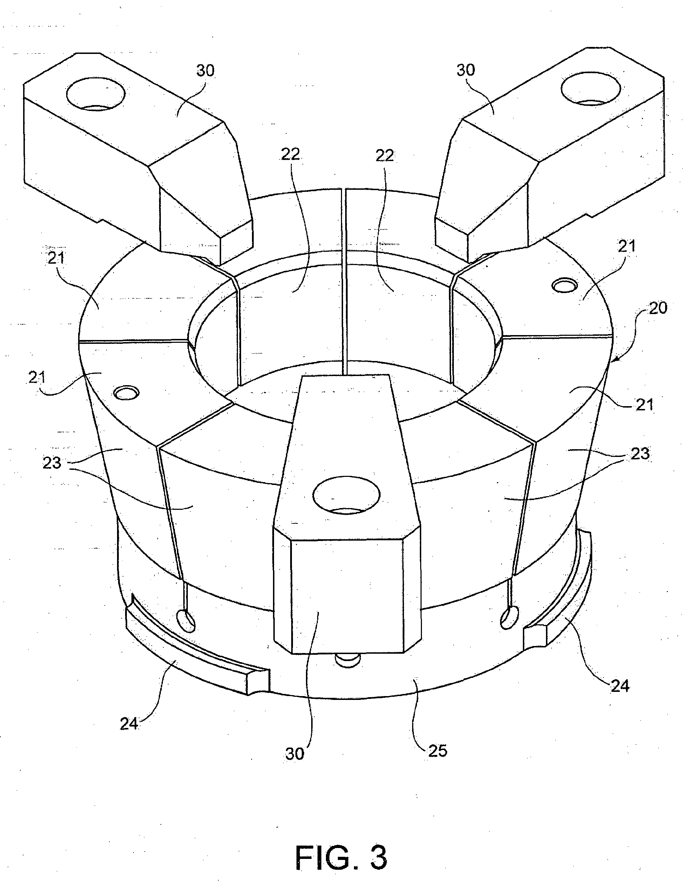

A centering sleeve 20 is accommodated in vertically slidable manner in the top seat 13 of the cavity 11. The centering sleeve 20 is divided into a plurality of circumferentially adjacent sectors 21 separated by angularly equally spaced axial planes passing through the vertical axis 12 of the cavity 11. The sectors 21 define together a radially inner surface 22 of cylindrical shape, and a radially outer surface 23 of frustoconical downwardly tapered shape mating the frustoconical top seat 13. At the bottom, the centering sleeve 20 may form a circumferentially continuous annular portion 25 to which the sectors 21 are connected (figure 3).

In the illustrated embodiment, the centering sleeve 20 has engagement means 24, in this example provided by radially outwards protruding formations 24 (figure 3), which allow to axially secure the sleeve 20 to a slider ring 16. The slider ring 16 is received in a vertically movable manner within the rotatable part 10 of the apparatus. The protruding formations 24 of the sleeve 20 are engaged in an annular groove 16a obtained in the slider ring 16.

A set of elastic elements 26, in this example vertical springs, only one of which is shown in the drawings, is interposed axially between the slider ring 16 and an upper annular abutment surface 27, which is vertically fixed and rigidly coupled to the rotatable part 10. The springs 26 urge the slider ring 16 and therefore the sleeve 20 downwards.

The slider ring 16 and the sleeve 20 can be raised due to lifting movements imparted to the piston 14, through a series of intermediate transmission elements 28a to 28e, interposed between the piston 14 and the slider ring 16. Transmission elements 28a - 28e are rigid elements, bound axially to the tubular piston 14 and are able to act in a vertical thrust relationship against a lower surface 16b of the slider ring 16, to push it upwards.

In the particular embodiment illustrated, owing to the axial coupling between the protruding formations 24 of the sleeve 20 and the slider ring 16, the lifting of the piston 14 also causes the lifting of the centering sleeve 20 in its entirety. Due to the engagement of the protruding formations 24 in the annular groove 16a, the lowering the slider ring 16 also causes the lowering of the centering sleeve 20.

Owing to the sliding coupling of the frustoconical mutually facing surfaces of the top seat 13 and the radially outer surfaces 23 of the sectors 21, the movements of lowering or lifting of the slider ring 16 cause an expansion or contraction, respectively, in the radial direction, of the space between the radially inner cylindrical surfaces of the sectors 21.

According to an embodiment, the apparatus is provided with a plurality of locking levers 30, in this example three in number, which serve for the axial clamping and locking of a bearing ring 40 to be machined. The locking levers 30 are located on an upper portion of the rotatable part 10, around the top frustoconical seat 13. For a better distribution of the loads, the levers 30 may be arranged angularly equally spaced about the vertical axis 12.

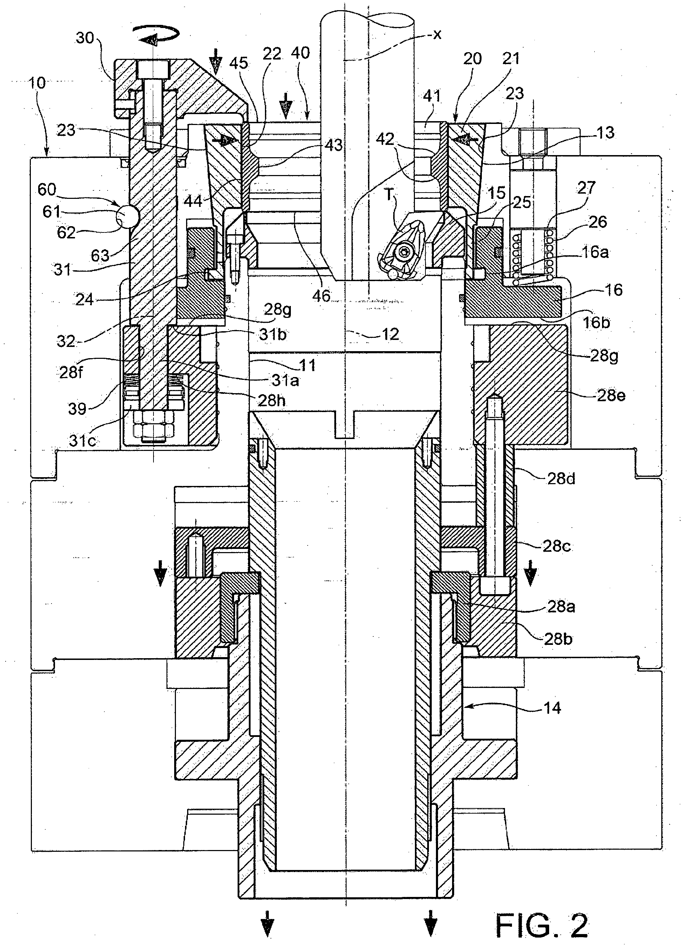

In a preferred embodiment, each locking lever 30 is secured to a respective rod 31 which extends along an axis 32 preferably parallel to the vertical rotation axis 12. In the particular embodiment shown in the figures, each rod 31 has the ability to slide vertically along its axis 32 and rotate around it to move the lever from a disengaged, radially outermost position (fig. 1), to a second, more central or radially innermost position of engagement (fig. 2). In the second position (fig. 2) the locking lever 30 protrudes at least partially in a radially innermost position with respect to an envelope of the radially inner cylindrical surfaces 21 of the sectors, in order to lock a bearing ring 40 to be machined.

According to a preferred embodiment, the lifting and lowering movements of the locking levers 30 and the rods 31, as well as rotation movements of the rods around their respective vertical axes 32, are performed as a result of the lifting and lowering movements of the tubular piston 14.

The intermediate transmission elements 28a to 28e, which are bound axially to the tubular piston 14, comprise an upper element 28e that is connected to the lower parts of the rods 31. The upper element 28e provides, for each rod 31, a respective through hole 28f that is crossed by a lower portion 31a of the rod 31. The upper element 28e has an upper horizontal surface 28g which abuts under and against a horizontal surface 31b of the rod 31.

According to an embodiment, a resilient element 39, in this example in the form of a helical spring, is interposed axially between an end retaining element 31c on the rod 31 and a lower horizontal surface 28h of the upper transmission element 28e.

Due to the abutment between the horizontal surfaces 28g and 31b, the lifting of the piston 14 and the transmission element 28e also causes the lifting of the rod 31 and the locking lever 30. The lowering of the piston 14 drags down the rods 31. The springs 39, which at this stage are elastically compressed between the retaining element 31c and the lower surface 28h, absorb an excess part of the force with which the piston 14 is lowered hydraulically. Therefore only a fraction of the strength of lowering of the piston 14 is transmitted to the levers 30, as explained herein after.

In the particular embodiment illustrated, each rod 31 is rotatable around its vertical axis, due to a cam mechanism 60 that comprises a ball 61 partially received in a hemispherical seat 62 formed in the rotatable part 10 of the apparatus, and partially in a helical groove 63 formed in the rod 31. Owing to the cam mechanism 60, the lifting and lowering movements imparted to the rod 31 will also cause it to rotate around its vertical axis 32.

An example of a bearing ring to be machined is designated at 40. The ring 40 defines a central axis of rotation x and has an axially extending internal cavity 41, in which there is formed at least one raceway 42 to be machined. In this example, two raceways 42, 42 are aligned in the axial direction and separated by a central shoulder 43. In addition, the bearing ring 40 has a radially outer cylindrical surface 44 and two opposite end surfaces 45, 46, extending transversely with respect to the axis of rotation x and located at two respective opposite axial ends of the ring 40.

The shape of the surfaces of the raceways, as well as their number, should not to be considered as limiting. In the illustrated example, the raceways 42 are rounded or toroidal for the balls of a bearing. In other embodiments not illustrated, the raceways may be cylindrical or frustoconical, for example, for the rolling elements of tapered roller bearings.

In a preliminary or initial processing step, illustrated in Fig. 1, the tubular piston 14 is in a vertically raised position. The slider ring 16 and the sectors 21 of the centering sleeve 20 are also raised. The sectors 21 are in contact with the top seat 13 of the cavity 11.

The sectors 21 are radially spaced to the extent that the radially outer cylindrical surface 44 of the ring 40 to be machined can be accommodated between the radially inner surfaces 21 of the sectors of the centering sleeve. In this condition, some circumferential clearance is also provided between two consecutive sectors 21 of the centering sleeve. The eccentric locking levers 30 are located in vertically raised positions rotated away from the axis 12, in such a way as to allow the insertion of the ring 40 in the centering sleeve.

The ring 40 is lowered into the space defined between the sectors 21 of the centering sleeve. The lower axial end 46 of the ring 40 rests on the axial positioner 15. In the condition illustrated in Fig. 1, the centering sleeve is located in a raised position, so there is some radial clearance between the outer cylindrical surface 44 of the ring 40 and the radially inner arched surfaces 22 of the sectors 21.

Subsequently (Fig. 2), the tubular piston 14 is lowered, pulling down the intermediate transmission elements 28a to 28e. The springs 26 are free to extend downwards, pushing down the slider 16. The latter pulls down the centering sleeve 20 with it. The lowering of the sectors 21 of the centering sleeve, by virtue of the sliding of their outer surfaces 23 against the frustoconical seat 13, causes the radial centering of the ring 40 with respect to the vertical axis 12 of the cavity 11.

Sliding down from the position of Fig. 1 to that of Fig. 2, the sectors 21 approach radially and take away the radial clearances between the rotatable part 10, the sectors 21 of the centering sleeve, and the ring 40. Due to the centering action, the central axis x of the bearing coincides with the vertical axis 12 around which the rotatable part of the apparatus 10 is then caused to rotate.

Owing to the cam mechanism 60, the lowering of the tubular piston 14 and the transmission elements 28a to 28e connected to the piston, lowers and rotates each rod 31 about its axis 32 (fig. 2), bringing the radially inner end of the respective lever 30 to engage the upper end surface 45 of the ring 40. in this condition, the ring 40 is axially clamped between the locking levers 30 and the axial positioner 15.

The centering sleeve 20 exerts negligible stresses in radially inner directions against the outer cylindrical surface 44 of the ring 40.

Advantageously, the axial clamping force exerted by the levers 30, is controlled through the springs 39. The springs 39, being resiliently compressed, have the effect that not all of the vertical stress imparted to the tubular piston 14 is integrally transmitted to the ring being machined.

The ring 40 is then driven for rotation, by controlling rotational movement of the rotatable part 10 around the vertical axis 12. As will be appreciated, the absence of radial stresses prevents deformation during the subsequent turning step, in which a cutting tool T is controlled in such a way as to follow a predetermined path in the internal cavity 41 of the ring, turning the raceways 42.

Thanks to the axial clamping of the ring, this is not deformed during the machining step. It will be observed that the sleeve 21 exerts merely a centering action, but not radial clamping for retaining the ring and driving it for rotation about the axis 12.

Owing to the present invention, in addition to achieving better quality and machining accuracy of the raceways, and improvement of the turning parameters can also be accomplished. The number of components (the jaws) required for retaining the ring being machined may be reduced. In fact, the locking levers 30 may serve for the locking of the bearing rings having different axial lengths and diameters. The yield of the apparatus is also increased, thanks to a shortening of the resetting time, as well as the time required for loading and unloading workpieces on the machine.

## Claims

1. Apparatus for machining bearing rings (40), the apparatus comprising a part (10) rotatable about a vertical axis of rotation (12), **characterized by** comprising:
a vertically extending cavity (11), formed by the rotatable part (10), wherein the cavity (11) has the shape of a surface of revolution around said vertical axis of rotation (12) and provides a frustoconical upper seat (13), upwardly open and downwardly tapering;
a lower, axial abutment means (15) located within the cavity (11) and having a fixed axial position along the axis of rotation (12);
a centering sleeve (20), vertically slidingly accommodated in the upper frustoconical seat (13), wherein the centering sleeve (20) is divided into a plurality of sectors (21) arranged around the vertical axis of rotation (12) of the apparatus, and wherein the sectors (21) together define a radially inner surface (22) of cylindrical shape, and a radially outer surface (23) of frustoconical, downwardly tapering shape, the sleeve being capable of reaching
- a vertically raised position, in which the sectors (21) of the centering sleeve (20) are radially spaced, to fit a bearing ring (40) amongst them with the ring abutting against the lower axial abutment means (15), and
- a vertically lowered position, in which the sectors (21) are radially closer so as to center the bearing ring (40) with respect to the vertical axis of rotation (12);
a plurality of locking elements (30) arranged around the upper opening of the upper seat (13) and mounted on elements (31) vertically sliding along and rotatable about vertical axes (32), whereby the locking elements are capable of reaching
- a first, disengaged position, in which the locking elements (30) are rotated away from the radially inner cylindrical surface (22), and
- a second, engaged position, in which the locking elements (30) are rotated so as to protrude at least partially above the radially inner cylindrical surface (22) and are lowered along said axes (32);
wherein the apparatus comprises first resilient means (26) adapted for urging the centering sleeve (20) towards its vertically lowered position.

2. Apparatus according to claim 1, **characterized by** comprising a linear driving element (14) vertically movable in the cavity (11) along the axis of rotation (12) and operatively connected to the centering sleeve (20) so as to cause lifting and lowering of the centering sleeve along the axis of rotation (12) between the vertically raised position and the vertically lowered position.

3. Apparatus according to claim 2, **characterized by** comprising an annular slider (16), axially secured to the centering sleeve (21) and to intermediate transmission means (28a-28e) interposed between the linear driving element (14) and the annular slider (16), wherein the intermediate transmission means are axially bound to the linear driving element (14) and are able to exert a vertical upward thrust against a lower surface (16b) of the annular slider (16).

4. Apparatus according to claim 3, **characterized in that** the first resilient means (26) are axially interposed between the annular slider (16) and an upper abutment surface (27) vertically fixed to the rotatable part (10), so as to push the annular slider (16) and the centering sleeve (20) downwards.

5. Apparatus according to claim 1, **characterized by** comprising second resilient means (39) which urge the vertically sliding elements (31) toward a lowered position along the axes (32).

6. Apparatus according to claims 3 and 5, **characterized in that** the second resilient means (39) are interposed between retaining elements (31c) integral with the vertically sliding elements (31) and a lower horizontal surface (28h) of one (28e) of the intermediate transmission means (28a-28e), and that said intermediate transmission means (28e) provides an upper horizontal surface (28g) abutting underneath and against horizontal surfaces (31b) of the vertically sliding elements (31).

7. Apparatus according to any one of the preceding claims, **characterized by** comprising, for each vertically sliding element (31), an associated cam mechanism (60) acting between the rotatable part (10) of the apparatus and said vertically sliding element (31), whereby vertical movements imparted to said vertically sliding element (31) along the axis (32) also cause a rotation of this element around its axis (32).

8. Apparatus according to claim 7, **characterized in that** each cam mechanism (60) comprises a ball (61) which is housed partly in a hemispherical seat (62) formed in the rotatable part (10) of the apparatus, and partly in a helical groove (63) formed in the vertically sliding element (31).

9. Apparatus according to claim 1, **characterized by** comprising an annular slider (16), axially secured to the centering sleeve (21), wherein the annular slider forms an annular groove (16a), and wherein the centering sleeve (20) provides radially outwardly protruding formations (24) engaging the annular groove (16a) of the annular slider (16).

## Patentansprüche

1. Vorrichtung zur maschinellen Bearbeitung von Lagerringen (40), wobei die Vorrichtung ein um eine vertikale Rotationsachse (12) drehbares Teil (10) umfasst, **dadurch gekennzeichnet, dass** sie einen durch das drehbare Teil (10) gebildeten, sich vertikal erstreckenden Hohlraum (11), der die Form einer Umdrehungsfläche um die vertikale Rotationsachse (12) hat und einen kegelstumpfförmigen oberen Sitz (13) bereitstellt, der nach oben offen ist und sich nach unten verjüngt,
ein unteres axiales Anschlagmittel (15), das in dem Hohlraum (11) angeordnet ist und eine festgelegte axiale Position entlang der Rotationsachse (12) hat,
eine Zentrierungshülse (20), die vertikal gleitend in dem oberen kegelstumpfförmigen Sitz (13) aufgenommen ist, wobei die Zentrierungshülse (20) in eine Vielzahl von Sektoren (21) unterteilt ist, die um die vertikale Rotationsachse (12) der Vorrichtung herum angeordnet sind, und wobei die Sektoren (21) zusammen eine radial innere Fläche (22) mit zylindrischer Form und eine radial äußere Fläche (23) mit kegelstumpfförmiger, sich nach unten verjüngender Form definieren, wobei die Hülse in der Lage ist,
- eine vertikal angehobene Position, in der die Sektoren (21) der Zentrierungshülse (20) radial beabstandet sind, um einen Lagerring (40) zwischen sich zu platzieren, wobei der Ring an das untere axiale Anschlagmittel (15) anschlägt, und
- eine vertikal abgesenkte Position, in der die Sektoren (21) radial näher sind, um den Lagerring (40) bezüglich der vertikalen Rotationsachse (12) zu zentrieren,
erreichen kann,
und eine Vielzahl von Arretierungselementen (30) umfasst, die um die obere Öffnung des oberen Sitzes (13) angeordnet und an Elementen (31) montiert sind, die vertikal an vertikalen Achsen (32) entlang gleiten und um diese drehbar sind, wodurch die Arretierungselemente in der Lage sind,
- eine erste, ausgerückte Position, in der die Arretierungselemente (30) von der radial inneren zylindrischen Fläche (22) weggedreht sind, und
- eine zweite, eingerückte Position, in der die Arretierungselemente (30) so gedreht sind, dass sie mindestens teilweise über die radial innere zylindrische Fläche (22) hinausragen, und entlang den Achsen (32) abgesenkt sind, zu erreichen,
wobei die Vorrichtung erste federnde Mittel (26) umfasst, die geeignet sind, die Zentrierungshülse (20) zu ihrer vertikal abgesenkten Position hin zu drängen.

2. Vorrichtung nach Anspruch 1, **dadurch gekennzeichnet, dass** sie ein lineares Treibelement (14) umfasst, das vertikal in dem Hohlraum (11) entlang der Rotationsachse (12) beweglich und mit der Zentrierungshülse (20) wirkverbunden ist, um das Anheben und Absenken der Zentrierungshülse entlang der Rotationsachse (12) zwischen der vertikal angehobenen Position und der vertikal abgesenkten Position zu veranlassen.

3. Vorrichtung nach Anspruch 2, **dadurch gekennzeichnet, dass** sie einen ringförmigen Gleiter (16) umfasst, der axial an der Zentrierungshülse (21) und an Zwischenübertragungsmitteln (28a - 28e), die zwischen dem linearen Treibelement (14) und dem ringförmigen Gleiter (16) angeordnet sind, befestigt ist, wobei die Zwischenübertragungsmittel axial mit dem linearen Treibelement (14) verbunden und in der Lage sind, einen vertikal nach oben gehenden Schub gegen eine untere Fläche (16b) des ringförmigen Gleiters (16) auszuüben.

4. Vorrichtung nach Anspruch 3, **dadurch gekennzeichnet, dass** die ersten federnden Mittel (26) axial zwischen dem ringförmigen Gleiter (16) und einer oberen Anschlagfläche (27), die vertikal am drehbaren Teil (10) befestigt ist, angeordnet sind, um den ringförmigen Gleiter (16) und die Zentrierungshülse (20) nach unten zu schieben.

5. Vorrichtung nach Anspruch 1, **dadurch gekennzeichnet, dass** sie zweite federnde Mittel (39) umfasst, die die vertikal gleitenden Elemente (31) entlang den Achsen (32) zu einer abgesenkten Position hin drängen.

6. Vorrichtung nach Ansprüchen 3 und 5, **dadurch gekennzeichnet, dass** die zweiten federnden Mittel (39) zwischen Halteelementen (31c), die mit den vertikal gleitenden Elementen (31) integral sind, und einer unteren horizontalen Fläche (28h) eines (28e) der Zwischenübertragungsmittel (28a - 28e) angeordnet sind, und dass das Zwischenübertragungsmittel (28e) eine obere horizontale Fläche (28g) bereitstellt, die unter und an horizontalen Flächen (31b) der vertikal gleitenden Elemente (31) anschlägt.

7. Vorrichtung nach einem der vorhergehenden Ansprüche, **dadurch gekennzeichnet, dass** sie für jedes vertikal gleitende Element (31) einen zugeordneten Nockenmechanismus (60) umfasst, der zwischen dem drehbaren Teil (10) der Vorrichtung und dem vertikal gleitenden Element (31) wirkt, wodurch vertikale Bewegungen, die dem vertikal gleitenden Element (31) entlang der Achse (32) verliehen werden, auch eine Drehung dieses Elements um seine Achse (32) herum veranlassen.

8. Vorrichtung nach Anspruch 7, **dadurch gekennzeichnet, dass** jeder Nockenmechanismus (60) eine Kugel (61) umfasst, die teilweise in einem halbkugelförmigen Sitz (62), der im drehbaren Teil (10) der Vorrichtung gebildet ist, und teilweise in einer in dem vertikal gleitenden Element (31) gebildeten spiralförmigen Nut (63) untergebracht ist.

9. Vorrichtung nach Anspruch 1, **dadurch gekennzeichnet, dass** sie einen ringförmigen Gleiter (16) umfasst, der axial an der Zentrierungshülse (21) befestigt ist, wobei der ringförmige Gleiter eine ringförmige Nut (16a) bildet und wobei die Zentrierungshülse (20) radial nach außen vorragende Gebilde (24) bereitstellt, die die ringförmige Nut (16a) des ringförmigen Gleiters (16) in Eingriff nehmen.

## Revendications

1. Appareil pour usiner des bagues de roulement (40), l'appareil comprenant une partie (10) pouvant tourner autour d'un axe vertical de rotation (12), **caractérisé en ce qu'**il comprend :
une cavité (11) s'étendant verticalement, constituée par la partie rotative (10), dans lequel la cavité (11) a la forme d'une surface de révolution autour dudit axe vertical de rotation (12) et offre un siège supérieur (13) tronconique, ouvert vers le haut et diminuant progressivement vers le bas ;
un moyen inférieur (15) de butée axiale situé à l'intérieur de la cavité (11) et ayant une position axiale fixe le long de l'axe de rotation (12) ;
un manchon de centrage (20), logé coulissant verticalement dans le siège supérieur (13) tronconique, dans lequel le manchon de centrage (20) est divisé en une pluralité de secteurs (21) disposés autour de l'axe vertical de rotation (12) de l'appareil et dans lequel les secteurs (21) définissent ensemble une surface radialement intérieure (22) de forme cylindrique et une surface radialement extérieure (23) de forme tronconique, diminuant progressivement vers le bas, le manchon étant capable d'atteindre :
- une position soulevée verticalement, dans laquelle les secteurs (21) du manchon de centrage (20) sont espacés radialement pour installer entre eux une bague de roulement (40), la bague venant en butée contre le moyen inférieur (15) de butée axiale, et
- une position abaissée verticalement, dans laquelle les secteurs (21) sont radialement rapprochés de façon à centrer la bague de roulement (40) par rapport à l'axe vertical de rotation (12) ;
une pluralité d'éléments de verrouillage (30) disposés autour de l'ouverture supérieure du siège supérieur (13) et montés sur des éléments (31) coulissant verticalement suivant des axes verticaux (32) et pouvant tourner d'eux, moyennant quoi les éléments de verrouillage sont capables d'atteindre :
- une première position désaccouplée, dans laquelle les éléments de verrouillage (30) sont éloignés par rotation de la surface radialement intérieure (22) cylindrique, et
- une seconde position en prise, dans laquelle les éléments de verrouillage (30) sont entraînés en rotation de façon à faire saillie au moins partiellement au-dessus de la surface radialement intérieure (22) cylindrique et sont abaissés le long desdits axes (32) ;
dans lequel l'appareil comprend des premiers moyens élastiques (26) conçus pour pousser le manchon de centrage (20) vers sa position abaissée verticalement.

2. Appareil selon la revendication 1, **caractérisé en ce qu'**il comprend un élément d'entraînement linéaire (14) mobile verticalement dans la cavité (11) suivant l'axe de rotation (12) et relié fonctionnellement au manchon de centrage (20) de façon à provoquer l'élévation et l'abaissement du manchon de centrage suivant l'axe de rotation (12) entre la position soulevée verticalement et la position abaissée verticalement.

3. Appareil selon la revendication 2, **caractérisé en ce qu'**il comprend un coulisseau annulaire (16), fixé axialement au manchon de centrage (21) et à des moyens intermédiaires (28a-28e) de transmission interposés entre l'élément d'entraînement linéaire (14) et le coulisseau annulaire (16), dans lequel les moyens intermédiaires de transmission sont axialement liés à l'élément d'entraînement linéaire (14) et sont capables d'exercer une poussée verticale vers le haut contre la surface inférieure (16b) du coulisseau annulaire (16).

4. Appareil selon la revendication 3, **caractérisé en ce que** les premiers moyens élastiques (26) sont interposés axialement entre le coulisseau annulaire (16) et une surface de butée supérieure (27) fixée verticalement à la partie rotative (10), de façon à pousser vers le bas le coulisseau annulaire (16) et le manchon de centrage (20).

5. Appareil selon la revendication 1, **caractérisé en ce qu'**il comprend des seconds moyens élastiques (39) qui sollicitent les éléments (31) coulissant verticalement le long des axes (32) vers une position abaissée.

6. Appareil selon les revendications 3 et 5, **caractérisé en ce que** les seconds moyens élastiques (39) sont interposés entre des éléments de retenue (31c) faisant partie intégrante des éléments (31) coulissant verticalement et la surface horizontale inférieure (28h) d'un (28e) des moyens intermédiaires (28a-28e) de transmission et **en ce que** ledit moyen intermédiaire (28e) de transmission offre une surface horizontale supérieure (28g) en butée sous et contre des surfaces horizontales (31b) des éléments (31) coulissant verticalement.

7. Appareil selon l'une quelconque des revendications précédentes, **caractérisé en ce qu'**il comprend, pour chaque élément (31) coulissant verticalement, un mécanisme associé (60) de came agissant entre la partie rotative (10) de l'appareil et ledit élément (31) coulissant verticalement, moyennant quoi les mouvements verticaux imprimés audit élément (31) coulissant verticalement suivant l'axe (32) provoquent aussi une rotation de cet élément autour de son axe (32).

8. Appareil selon la revendication 7, **caractérisé en ce que** chaque mécanisme (60) de came comprend une bille (61) qui se loge pour partie dans un siège hémisphérique (62) formé dans la partie rotative (10) de l'appareil et pour partie dans une rainure hélicoïdale (63) formée dans l'élément (31) coulissant verticalement.

9. Appareil selon la revendication 1, **caractérisé en ce qu'**il comprend un coulisseau annulaire (16), fixé axialement au manchon de centrage (21), dans lequel le coulisseau annulaire comporte une rainure annulaire (16a) et dans lequel le manchon de centrage (20) présente des formations (24) Faisant saillie radialement vers l'extérieur qui entrent en prise avec la rainure annulaire (16a) du coulisseau annulaire (16).
